(19) **Europäisches Patentamt**
**European Patent Office**
**Office européen des brevets**

(11) **EP 3 021 638 B1**

(12) **EUROPEAN PATENT SPECIFICATION**

(45) Date of publication and mention
of the grant of the patent:
**30.08.2017 Bulletin 2017/35**

(51) Int Cl.:
***H02M 1/15*** *(2006.01)*  ***H02M 3/155*** *(2006.01)*
*H04B 7/155* *(2006.01)*  *H04W 88/08* *(2009.01)*
*H03F 1/02* *(2006.01)*

(21) Application number: **13889255.9**

(22) Date of filing: **08.07.2013**

(86) International application number:
**PCT/CN2013/078988**

(87) International publication number:
**WO 2015/003296 (15.01.2015 Gazette 2015/02)**

(54) **REMOTE RADIO UNIT AND ASSOCIATED DEVICE**

ENTFERNTE FUNKEINHEIT UND ZUGEHÖRIGE VORRICHTUNG

UNITÉ DE RADIO DISTANTE ET DISPOSITIF ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.05.2016 Bulletin 2016/20**

(73) Proprietor: **Huawei Technologies Co., Ltd.
Longgang District
Shenzhen, Guangdong 518129 (CN)**

(72) Inventors:
• **YANG, Wenke
Shenzhen
Guangdong 518129 (CN)**

• **FENG, Yun
Shenzhen
Guangdong 518129 (CN)**
• **WANG, Xinya
Shenzhen
Guangdong 518129 (CN)**

(74) Representative: **Epping - Hermann - Fischer
Patentanwaltsgesellschaft mbH
Schloßschmidstraße 5
80639 München (DE)**

(56) References cited:
**EP-A1- 2 449 663      CN-A- 101 656 437
CN-A- 101 841 935      CN-A- 102 064 770
CN-A- 102 064 880      CN-A- 102 439 835
US-A1- 2012 208 584      US-B1- 7 019 503**

EP 3 021 638 B1

## Description

### TECHNICAL FIELD

The present invention relates to the field of communications technologies, and in particular, to a remote radio unit and a related device.

### BACKGROUND

In a wireless communications product, in a time division duplexing (TDD, Time Division Duplexing) transmission standard, if the wireless communications product is powered by a direct current power supply, a load current of the power supply may present a current waveform, similar to a square wave, of a frequency of several hundred hertz or a lower frequency. The square wave load waveform of a frequency of several hundred hertz or a lower frequency is completely presented in a power supply input port of a device and manifests itself as a square wave current. Because impedance of a remote power cable connected to the input port of the device is relatively large, a square wave voltage of a corresponding frequency is reflected in an input port of a module.

For example, an internal power supply voltage of a remote radio unit (RRU, Remote Radio Unit) has a particular input range, which is generally from 36 V to 60 V. When the internal power supply voltage is lower than 36 V, the RRU cannot work properly. Therefore, during a process of actual installation, it is only required that after an output voltage of the power source drops, a voltage at a port of the RRU be not lower than 36 V. A voltage drop of a cable is proportional to a current running through the cable and to impedance of the cable. The impedance of the cable bears a direct relationship to a diameter and a length of the cable. In a normal case, a longer length and a smaller diameter indicate larger impedance.

In the prior art, during design of the cable, a longest remote distance of a power cable is designed according to a maximum value of the current. Compared with a cable of designed according to an average current (an average of a maximum current value and a minimum current value after low-frequency filtering), the diameter of the cable in the prior art is much larger, and corresponding costs of the cable greatly increase. Patent application EP 2449663 discloses a power supply with dynamic input current suppression.

### SUMMARY

Embodiments of the present invention provide a remote radio unit and a related device, so as to reduce costs of material selection for a remote power cable of the RRU and reduce limitation on a remote distance of the power cable.

A first aspect of the present invention provides a remote radio unit, where the remote radio unit may include:

a power conversion circuit, a low-frequency control circuit, an energy storage circuit, an isolation conversion circuit, and a power amplifier transistor, where

the power conversion circuit is configured to boost a voltage input by a power supply source of the remote radio unit and then output a voltage;

the isolation conversion circuit is configured to perform primary and secondary safety regulation isolation on the voltage output by the power conversion circuit and then output the voltage to the power amplifier transistor; and

the energy storage circuit is connected in parallel to the isolation conversion circuit, where

the low-frequency control circuit connected to the power conversion circuit is configured to control a fluctuation range of an input current of the power conversion circuit to be in a preset range.

With reference to the first aspect, in a first possible implementation manner,

the power conversion circuit includes: a diode, a first inductor, and a switching transistor, where

a positive electrode of the diode is connected to a positive input end of the remote radio unit by using the first inductor, the positive electrode of the diode is further connected to a drain electrode of the switching transistor, a source electrode of the switching transistor is connected to a negative input end of the remote radio unit, and a gate electrode of the switching transistor is connected to an output end of the low-frequency control circuit.

With reference to the first possible implementation manner of the first aspect, in a second possible implementation manner,

the energy storage circuit includes a capacitor, where the capacitor is connected between a negative electrode of the diode and the source electrode of the switching transistor.

With reference to the first possible implementation manner of the first aspect or the second possible implementation manner of the first aspect, in a third possible implementation manner,

the low-frequency control circuit includes: a second inductor, a first amplifier, a second amplifier, a first comparator, and a multiplier, where

the second inductor is configured to induce a current from a negative output end of the power supply source of the remote radio unit, where two ends of the second inductor are respectively connected to two input ends of the first amplifier, an output end of the first amplifier is connected to a first inverting input end of the first comparator, a positive input end of the second amplifier is connected to an output end of a first reference voltage, a negative input end of the second amplifier is connected to the negative electrode of the diode, an output end of the second amplifier is connected to a first input end of the multiplier, a second input end of the multiplier is connected to an output end of a constant direct current voltage, an output end of the multiplier is connected to a second inverting input end of the first comparator, and a non-inverting input end of the first comparator is connected to an output end of a second reference voltage.

With reference to the first possible implementation manner of the first aspect or the second possible implementation manner of the first aspect, in a fourth possible implementation manner,

the low-frequency control circuit includes: a third resistor, a first amplifier, a second amplifier, a first comparator, and a multiplier, where

the negative input end of the remote radio unit is connected to the source electrode of the switching transistor by using the third resistor, two ends of the third resistor are respectively connected to two input ends of the first amplifier, an output end of the first amplifier is connected to a first inverting input end of the first comparator, a positive input end of the second amplifier is connected to an output end of a first reference voltage, a negative input end of the second amplifier is connected to the negative electrode of the diode, an output end of the second amplifier is connected to a first input end of the multiplier, a second input end of the multiplier is connected to an output end of a constant direct current voltage, an output end of the multiplier is connected to a second inverting input end of the first comparator, and a non-inverting input end of the first comparator is connected to an output end of a second reference voltage.

With reference to the third possible implementation manner of the first aspect or the fourth possible implementation manner of the first aspect, in a fifth possible implementation manner, the low-frequency control circuit further includes a bleeder circuit, where the negative input end of the second amplifier is connected to the negative electrode of the diode by using the bleeder circuit.

With reference to the fourth possible implementation manner of the first aspect or the fifth possible implementation manner of the first aspect, in a sixth possible implementation manner,

the bleeder circuit includes a fourth resistor and a fifth resistor, where the negative input end of the second amplifier is connected to the negative electrode of the diode by using the fourth resistor, and the negative input end of the second amplifier is further grounded by using the fifth resistor.

A second aspect of the present invention provides a base station, where the base station may include:

a baseband unit and a remote radio unit, where the remote radio unit may include:

a power conversion circuit, a low-frequency control circuit, an energy storage circuit, an isolation conversion circuit, and a power amplifier transistor, where

the power conversion circuit is configured to boost a voltage input by a power supply source of the remote radio unit and then output a voltage;

the isolation conversion circuit is configured to perform primary and secondary safety regulation isolation on the voltage output by the power conversion circuit and then output the voltage to the power amplifier transistor; and

the energy storage circuit is connected in parallel to the isolation conversion circuit, where

the low-frequency control circuit connected to the power conversion circuit is configured to control a fluctuation range of an input current of the power conversion circuit to be in a preset range.

With reference to the second aspect, in a first possible implementation manner,

the power conversion circuit includes: a diode, a first inductor, and a switching transistor, where

a positive electrode of the diode is connected to a positive input end of the remote radio unit by using the first inductor, the positive electrode of the diode is further connected to a drain electrode of the switching transistor, a source electrode of the switching transistor is connected to a negative input end of the remote radio unit, and a gate electrode of the switching transistor is connected to an output end of the low-frequency control circuit.

With reference to the first possible implementation manner of the second aspect, in a second possible implementation manner,

the energy storage circuit includes a capacitor, where the capacitor is connected between a negative electrode of the diode and the source electrode of the switching transistor.

With reference to the first possible implementation manner of the second aspect or the second possible implementation manner of the second aspect, in a third possible implementation manner,

the low-frequency control circuit includes: a second inductor, a first amplifier, a second amplifier, a first comparator, and a multiplier, where

the second inductor is configured to induce a current from a negative output end of the power supply source of the remote radio unit, where two ends of the second inductor are respectively connected to two input ends of the first amplifier, an output end of the first amplifier is connected to a first inverting input end of the first comparator, a positive input end of the second amplifier is connected to an output end of a first reference voltage, a negative input end of the second amplifier is connected to the negative electrode of the diode, an output end of the second amplifier is connected to a first input end of the multiplier, a second input end of the multiplier is connected to an output end of a constant direct current voltage, an output end of the multiplier is connected to a second inverting input end of the first comparator, and a non-inverting input end of the first comparator is connected to an output end of a second reference voltage.

With reference to the first possible implementation manner of the second aspect or the second possible implementation manner of the second aspect, in a fourth possible implementation manner,

the low-frequency control circuit includes: a third resistor, a first amplifier, a second amplifier, a first comparator, and a multiplier, where

the negative input end of the remote radio unit is connected to the source electrode of the switching transistor by using the third resistor, two ends of the third resistor are respectively connected to two input ends of the first amplifier, an output end of the first amplifier is connected to a first inverting input end of the first comparator, a positive input end of the second amplifier is connected to an output end of a first reference voltage, a negative input end of the second amplifier is connected to the negative electrode of the diode, an output end of the second amplifier is connected to a first input end of the multiplier, a second input end of the multiplier is connected to an output end of a constant direct current voltage, an output end of the multiplier is connected to a second inverting input end of the first comparator, and a non-inverting input end of the first comparator is connected to an output end of a second reference voltage.

With reference to the third possible implementation manner of the second aspect or the fourth possible implementation manner of the second aspect, in a fifth possible implementation manner, the low-frequency control circuit further includes a bleeder circuit, where the negative input end of the second amplifier is connected to the negative electrode of the diode by using the bleeder circuit.

With reference to the fourth possible implementation manner of the second aspect or the fifth possible implementation manner of the second aspect, in a sixth possible implementation manner,

the bleeder circuit includes a fourth resistor and a fifth resistor, where the negative input end of the second amplifier is connected to the negative electrode of the diode by using the fourth resistor, and the negative input end of the second amplifier is further grounded by using the fifth resistor.

A third aspect of the present invention provides a wireless transceiver device, where the wireless transceiver device may include: a remote radio unit and a power supply source that is used for supplying power to the remote radio unit, where the remote radio unit may include:

a power conversion circuit, a low-frequency control circuit, an energy storage circuit, an isolation conversion circuit, and a power amplifier transistor, where

the power conversion circuit is configured to boost a voltage input by a power supply source of the remote radio unit and then output a voltage;

the isolation conversion circuit is configured to perform primary and secondary safety regulation isolation on the voltage output by the power conversion circuit and then output the voltage to the power amplifier transistor; and

an output end of the energy storage circuit is connected in parallel to an input end of the isolation conversion circuit, where

the low-frequency control circuit connected to the power conversion circuit is configured to control a fluctuation range of an input current of the power conversion circuit to be in a preset range.

With reference to the third aspect, in a first possible implementation manner,

the power conversion circuit includes: a diode, a first inductor, and a switching transistor, where

a positive electrode of the diode is connected to a positive input end of the remote radio unit by using the first inductor, the positive electrode of the diode is further connected to a drain electrode of the switching transistor, a source electrode of the switching transistor is connected to a negative input end of the remote radio unit, and a gate electrode of the switching transistor is connected to an output end of the low-frequency control circuit.

With reference to the first possible implementation manner of the third aspect, in a second possible implementation manner,

the energy storage circuit includes a capacitor, where the capacitor is connected between a negative electrode of the diode and the source electrode of the switching transistor.

With reference to the first possible implementation manner of the third aspect or the second possible implementation manner of the third aspect, in a third possible implementation manner,

the low-frequency control circuit includes: a second inductor, a first amplifier, a second amplifier, a first comparator, and a multiplier, where

the second inductor is configured to induce a current from a negative output end of the power supply source of the remote radio unit, where two ends of the second inductor are respectively connected to two input ends of the first amplifier, an output end of the first amplifier is connected to a first inverting input end of the first comparator, a positive input end of the second amplifier is connected to an output end of a first reference voltage, a negative input end of the second amplifier is connected to the negative electrode of the diode, an output end of the second amplifier is connected to a first input end of the multiplier, a second input end of the multiplier is connected to an output end of a constant direct current voltage, an output end of the multiplier is connected to a second inverting input end of the first comparator, and a non-inverting input end of the first comparator is connected to an output end of a second reference voltage.

With reference to the first possible implementation manner of the third aspect or the second possible implementation manner of the third aspect, in a fourth possible implementation manner,

the low-frequency control circuit includes: a third resistor, a first amplifier, a second amplifier, a first comparator, and a multiplier, where

the negative input end of the remote radio unit is connected to the source electrode of the switching transistor by using the third resistor, two ends of the third resistor are respectively connected to two input ends of the first amplifier, an output end of the first amplifier is connected to a first inverting input end of the first comparator, a positive input end of the second amplifier is connected to an output end of a first reference voltage, a negative input end of the second amplifier is connected to the negative electrode of the diode, an output end of the second amplifier is connected to a first input end of the multiplier, a second input end of the multiplier is connected to an output end of a constant direct current voltage, an output end of the multiplier is connected to a second inverting input end of the first comparator, and a non-inverting input end of the first comparator is connected to an output end of a second reference voltage.

With reference to the third possible implementation manner of the third aspect or the fourth possible implementation manner of the third aspect, in a fifth possible implementation manner, the low-frequency control circuit further includes a bleeder circuit, where the negative input end of the second amplifier is connected to the negative electrode of the diode by using the bleeder circuit.

With reference to the fourth possible implementation manner of the third aspect or the fifth possible implementation manner of the third aspect, in a sixth possible implementation manner,

the bleeder circuit includes a fourth resistor and a fifth resistor, where the negative input end of the second amplifier is connected to the negative electrode of the diode by using the fourth resistor, and the negative input end of the second amplifier is further grounded by using the fifth resistor.

It may be learned from the foregoing that, an RRU in the embodiments of the present invention includes a power conversion circuit, a low-frequency control circuit, an isolation conversion circuit, an energy storage circuit, and a power amplifier transistor, where the power conversion circuit is configured to boost a voltage input by a power supply source of the RRU and then output a voltage, the isolation conversion circuit is configured to perform primary and secondary safety regulation isolation on the voltage output by the power conversion circuit and then output the voltage to the power amplifier transistor, the energy storage circuit is connected in parallel to an input end of the isolation conversion circuit, and the low-frequency control circuit is configured to control a fluctuation range of an input current of the power conversion circuit to be in a preset range. Introducing the foregoing low-frequency control circuit, the energy storage circuit, and the like in the RRU helps smooth an input current of the RRU. In a scenario in which two power supply cables that connect the RRU and the power supply source are long enough, that is, the power supply source provides remote power supply for the RRU, smoothing the input current of the RRU (that is, a fluctuation range of the input current of the RRU is relatively small) helps implement that, for the power cables for providing remote power supply for the RRU, a smaller cable diameter is selected for use, a remote distance may also be longer, and the cable diameter and the remote distance may basically be not affected by changes of an input voltage of the RRU and load power (that is, a power transistor). In addition, in a scenario in which a load current or load power of the RRU greatly fluctuates, smoothing the input current of the RRU also helps reduce mutual impact among devices.

## BRIEF DESCRIPTION OF DRAWINGS

To describe the technical solutions in the embodiments of the present invention more clearly, the following briefly introduces the accompanying drawings required for describing the embodiments and the prior art. Apparently, the accompanying drawings in the following description merely show some embodiments of the present invention, and a person of ordinary skill in the art may further derive other drawings from these accompanying drawings without creative efforts.

FIG. 1 is a schematic diagram of a remote radio unit according to an embodiment of the present invention;

FIG. 2 is another schematic diagram of a remote radio unit according to an embodiment of the present invention;

FIG. 3 is another schematic diagram of a remote radio unit according to an embodiment of the present invention;

FIG. 4 is another schematic diagram of a remote radio unit according to an embodiment of the present invention;

FIG. 5 is another schematic diagram of a remote radio unit according to an embodiment of the present invention;

FIG. 6 is a schematic diagram of a relationship between an input current and an input voltage of a remote radio unit according to an embodiment of the present invention;

FIG. 7 is a schematic diagram of a waveform of an input current of a power amplifier transistor in a remote radio unit according to an embodiment of the present invention;

FIG. 8 is a schematic diagram of a base station according to an embodiment of the present invention;

FIG. 9 is another schematic diagram of a base station according to an embodiment of the present invention; and

FIG. 10 is a schematic diagram of a wireless transceiver device according to an embodiment of the present invention.

## DESCRIPTION OF EMBODIMENTS

Embodiments of the present invention provide a remote radio unit and a related device, so as to reduce costs of material selection for a remote power cable of the RRU and reduce limitation on a remote distance of the power cable.

To make the invention objectives, features, and advantages of the present invention clearer and more comprehensible, the following clearly and completely describes the technical solutions in the embodiments of the present invention with reference to the accompanying drawings in the embodiments of the present invention. Apparently, the embodiments described in the following are merely a part rather than all of the embodiments of the present invention. All other embodiments obtained by a person of ordinary skill in the art based on the embodiments of the present invention without creative efforts shall fall within the protection scope of the present invention.

In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in orders except the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

The following uses specific embodiments to provide respective descriptions in detail.

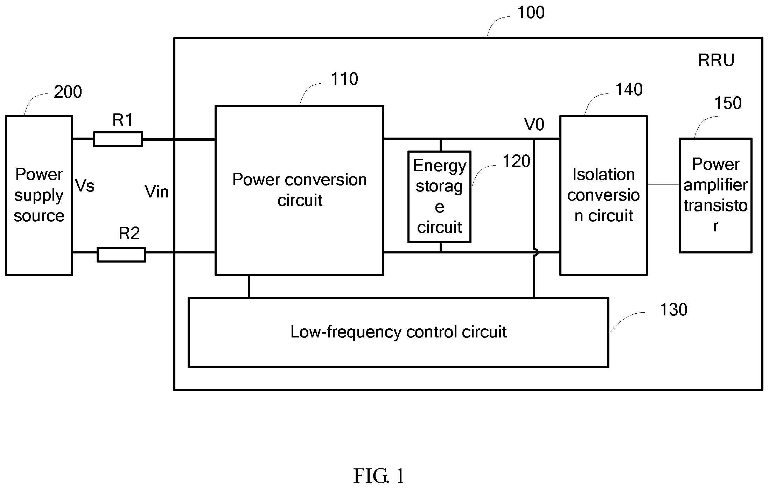

Referring to FIG. 1, an embodiment of the present invention provides a remote radio unit 100, where the remote radio unit 100 operates in a TDD mode. The remote radio unit 100 may include a power conversion circuit 110, a low-frequency control circuit 130, an energy storage circuit 120, an isolation conversion circuit 140, and a power amplifier transistor 150.

The power conversion circuit 110 is configured to boost a voltage input by a power supply source 200 of the remote radio unit 100 to the power conversion circuit 110 and then output a voltage. If the power supply source 200 is located at a remote end relative to the remote radio unit 100, in this case, the power supply source 200 may also be referred to as a power supply source. A first resistor R1 and a second resistor R2 in FIG. 1 are equivalent impedance of two power supply cables that connect the remote radio unit 100 and the power supply source 200. It may be understood that when the two power supply cables that connect the remote radio unit 100 and the power supply source 200 are long enough, the equivalent impedance of the two power supply cables is also large enough. In this case, the equivalent impedance is generally not ignored for processing.

The isolation conversion circuit 140 is configured to perform primary and secondary safety regulation isolation on the voltage output by the power conversion circuit 110 and then output the voltage to the power amplifier transistor 150.

The energy storage circuit 120 is connected in parallel to the isolation conversion circuit 140.

The low-frequency control circuit 130 connected to the power conversion circuit 110 is configured to control a fluctuation range of an input current of the power conversion circuit 110 to be in a preset range.

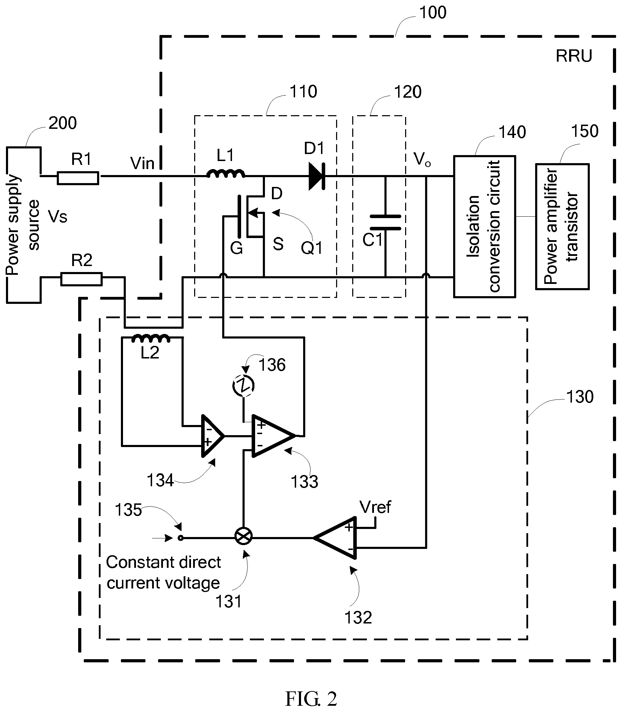

Referring to FIG. 2 to FIG. 5, in some embodiments of the present invention, the power conversion circuit 110 may include:

a diode D1, a first inductor L1, and a switching transistor Q1.

A positive electrode of the diode D1 is connected to a positive input end of the remote radio unit 100 by using the first inductor L1 (the positive input end of the remote radio unit 100 is connected to a positive output end of the power supply source 200, which therefore, is equivalent to that the positive electrode of the diode D1 is connected to the positive output end of the power supply source 200 by using the first inductor L1), the positive electrode of the diode D1 is further connected to a drain electrode D of the switching transistor Q1, a source electrode S of the switching transistor Q1 is connected to a negative input end of the remote radio unit 100 (the negative input end of the remote radio unit 100 is connected to a negative output end of the power supply source 200, which therefore, is equivalent to that the source electrode S of the switching transistor Q1 is connected to the negative output end of the power supply source 200), and a gate electrode G of the switching transistor Q1 is connected to an output end of the foregoing low-frequency control circuit.

Referring to FIG. 2 to FIG. 5, in some embodiments of the present invention, the energy storage circuit 120 includes a capacitor C1, where the capacitor C1 is connected between a negative electrode of the diode D1 and the source electrode S of the switching transistor Q1. Referring to FIG. 2, in some embodiments of the present invention, the low-frequency control circuit 130 may include:

a second inductor L2, a first amplifier 134, a second amplifier 132, a first comparator 133, and a multiplier 131.

The second inductor L2 is configured to induce a current from the negative output end of the power supply source 200 of the remote radio unit 100, where two ends of the second inductor L2 are respectively connected to two input ends of the first amplifier 134, an output end of the first amplifier 134 is connected to a first inverting input end of the first comparator 133, a positive input end of the second amplifier 132 is connected to an output end Vref of a first reference voltage (the output end of the first reference voltage outputs the first reference voltage), and a negative input end of the second amplifier 132 is connected to a negative electrode of the diode D1 in the power conversion circuit 110, where an output end of the second amplifier 132 is connected to a first input end of the multiplier 131, a second input end of the multiplier 131 is connected to an output end 135 of a constant direct current voltage (the output end 135 of the constant direct current voltage outputs the constant direct current voltage), an output end of the multiplier 131 is connected to a second inverting input end of the first comparator 133, and a non-inverting input end of the first comparator 133 is connected to an output end 136 of a second reference voltage.

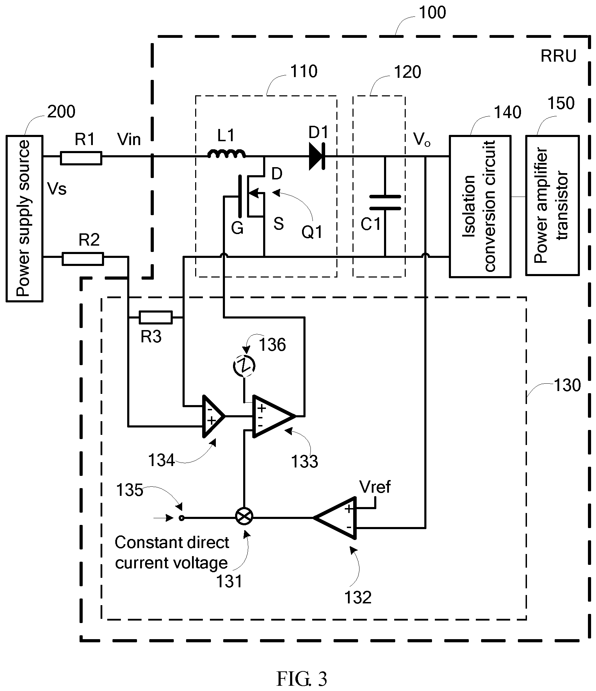

Referring to FIG. 3, in some embodiments of the present invention, the low-frequency control circuit 130 may include:

a third resistor R3, a first amplifier 134, a second amplifier 132, a first comparator 133, and a multiplier 131.

The negative input end of the remote radio unit 100 is connected to the source electrode S of the switching transistor Q1 by using the third resistor R3, two ends of the third resistor R3 are respectively connected to two input ends of the first amplifier 134, an output end of the first amplifier 134 is connected to a first inverting input end of the first comparator 133, a positive input end of the second amplifier 132 is connected to an output end Vref of a first reference voltage (a voltage output by the output end Vref of the first reference voltage is the first reference voltage, and the first reference voltage may be a constant voltage and is used to be compared with the negative input end of the second amplifier 132), and a negative input end of the second amplifier 132 is connected to the negative electrode of the diode D1, where an output end of the second amplifier 132 is connected to a first input end of the multiplier 131, a second input end of the multiplier 131 is connected to an output end 135 of a constant direct current voltage (the output end 135 of the constant direct current voltage outputs the constant direct current voltage), an output end of the multiplier 131 is connected to a second inverting input end of the first comparator 133, and a non-inverting input end of the first comparator 133 is connected to an output end 136 of a second reference voltage (a voltage output by the output end 136 of the second reference voltage is the second reference voltage, the second reference voltage may be a constant voltage and is used to be compared separately with voltages of the first inverting input end of the first comparator 133 and the second inverting input end of the first comparator 133).

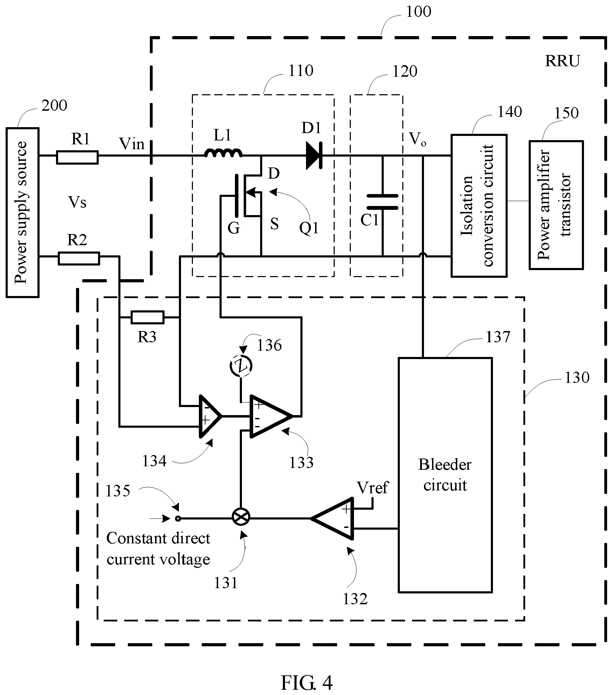

Referring to FIG. 4, in some embodiments of the present invention, the low-frequency control circuit 130 may further include:

a bleeder circuit 137, where the negative input end of the second amplifier 132 is connected to the negative electrode of the diode D1 by using the bleeder circuit 137. Introduction of the bleeder circuit 137 may avoid a problem that: safety of operating of a circuit may be affected because an output voltage VO of the power conversion circuit 110 is excessively high.

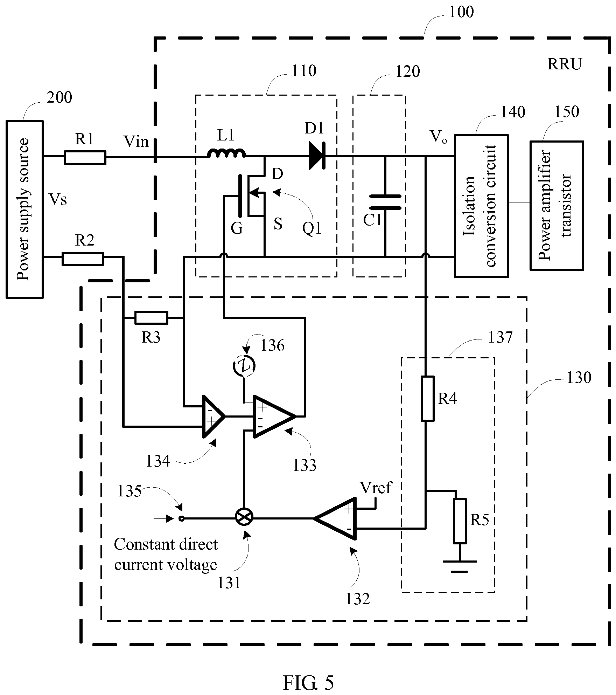

Referring to FIG. 5, in some embodiments of the present invention, the bleeder circuit 137 shown in FIG. 4 may specifically include:

a fourth resistor R4 and a fifth resistor R5, where the negative input end of the second amplifier 132 is connected to the negative electrode of the diode D1 by using the fourth resistor R4, and the negative input end of the second amplifier 132 is further grounded by using the fifth resistor R5. It may be understood that a structure of the bleeder circuit shown in FIG. 5 is simple, costs of the bleeder circuit are low, and an operating status is quite stable.

It may be understood that some embodiments of the present invention shown in FIG. 4 and FIG. 5 are described by using a structure of the low-frequency control circuit 130 shown in FIG. 3. In some embodiments of the present invention, the bleeder circuit 137 may be added in a structure of the low-frequency control circuit 130 shown in FIG. 2, and a connection manner thereof is similar. Details are not described herein again.

It may be understood that the switching transistor Q1 shown in FIG. 2 to FIG. 5 may be replaced with a triode transistor whose function is similar to that of the switching transistor Q1. A manner of connections between ports of the alternative triode transistor and other devices is similar to a manner of connections between ports of the switching transistor Q1 and other devices, and details are not described herein again.

In a scenario in which an input power cable is remote, a power cable between the power supply source of the RRU and the RRU is relatively long (may be as long as tens of meters or even hundreds of meters); therefore, impedance of the remote power cable is a problem that needs to be considered. It is assumed that R1 and R2 are equivalent impedance of the remote power cable, Vs represents an output voltage of the power supply source of the RRU (Vs is constant), and Vin represents an input voltage of the RRU, and Iin represents an input current of the RRU; then, a relationship between Vs and Vin may be expressed by the following formula:

$$Vin = Vs - Iin \times (R1 + R2).$$

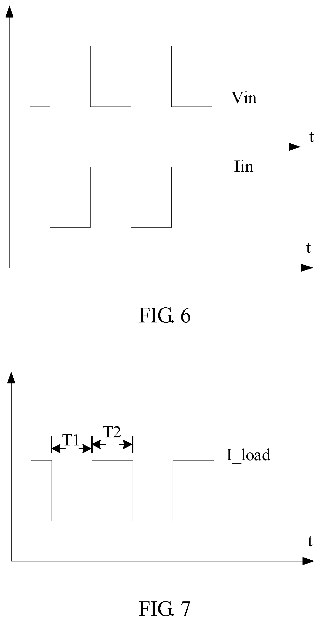

Therefore, Vin decreases with the increase of Iin, and a variation relationship between Vin and Iin may be shown in FIG. 6.

As shown in FIG. 6, when the input current Iin of the RRU periodically changes, the input voltage Vin of the RRU also periodically changes. Therefore, if the input current Iin of the RRU periodically and greatly changes without control, consequently a variation range of the input voltage Vin of the RRU is quite wide (certainly, it needs to be ensured that a lowest voltage is not lower than a required lowest input voltage of the RRU), which definitely brings about problems such as relatively high costs of the power cable and increased difficulty in selecting a type of an internal device of the RRU. Therefore, in the technical solutions of the embodiments of the present invention, the energy storage circuit 120 and the low-frequency control circuit 130 are introduced in the RRU to control a fluctuation range of an input current to be in a preset range, which controls the input current to follow a constant voltage to maintain stableness and constancy.

The circuits that are shown in FIG. 1 to FIG. 5 and provided by embodiments of the present invention may pertinently resolve a problem of remoteness of the power cable for supplying power to the RRU in a TDD standard. For the power cable for supplying remote power to the RRU, a smaller cable diameter may be selected for use, a remote distance may also be longer, and the cable diameter and the remote distance may basically be not affected by changes of the input voltage of the RRU and load power (that is, a power transistor). In a scenario in which a load current or load power of the RRU greatly fluctuates, smoothing the input current of the RRU (for example, the input current of the power conversion circuit 110) helps reduce mutual impact among devices. In addition, several structures of circuit with low costs, stable and reliable performance, and safe running are provided as examples in FIG. 2 to FIG. 5, which helps better implement and promote RRU products.

The following briefly introduces operating principles of the circuit.

The low-frequency control circuit 130 detects an input current Iin of the power conversion circuit 110. The low-frequency control circuit 130 shown in FIG. 3 to FIG. 5 detects the input current Iin of the power conversion circuit 110 by using the third resistor R3. The current Iin running through the third resistor R3 is equal to a voltage of the two ends of the third resistor R3 divided by a resistance value of the third resistor R3. Therefore, a voltage that has a proportional relationship with the input current Iin may be acquired by using the third resistor R3. The input current Iin of the power conversion circuit 110 in FIG. 3 to FIG. 5 runs through the third resistor R3; therefore, the voltage of the two ends of the third resistor R3, that is, VR3 = Iin* R3, and Iin = VR3/R3. The low-frequency control circuit 130 in FIG. 2 can obtain the voltage that has a proportional relationship with the input current Iin of the power conversion circuit 110 by using the second inductor L2, where the second inductor L2 in FIG. 2 induces the input current Iin of the power conversion circuit 110 in a manner of mutual inductance, and a voltage VL2 of the two ends of the second inductor L2 also has a proportional relationship with the input current Iin of the power conversion circuit 110.

In the low-frequency control circuit 130, the multiplier 131 is used to multiply a constant direct current voltage Vh (the output end 135 of the constant direct current voltage in FIG. 2 to FIG. 5 outputs the constant direct current voltage Vh) by A to obtain a result B2 (that is, an output voltage of the multiplier 131 is B2), where A is an output of the second amplifier 132. The low-frequency control circuit 130 shown in FIG. 2 and FIG. 3 has no bleeder circuit; therefore, A = Vref - VO. The low-frequency control circuit 130 shown in FIG. 4 and FIG. 5 further includes the bleeder circuit; therefore, A = Vref - VO*1/H, where VO is the output voltage of the power conversion circuit 110, and 1/H is a voltage division ratio of the bleeder circuit 137. If H is equal to 1, it indicates that the bleeder circuit 137 is not introduced (a scenario in which the bleeder circuit 137 is not introduced may be shown in FIG. 2 and FIG. 3).

It is assumed that an output voltage of the first amplifier 134 is B1, and the output voltage of the multiplier 131 is B2. When the voltage B1 is greater than the voltage B2, the first comparator 133 outputs a low electrical level, in this case, the switching transistor Q1 is disconnected, and when the switching transistor Q1 is disconnected, and an output current Io of the power conversion circuit 110 becomes small; when the voltage B1 is less than the voltage B2, the first comparator 133 outputs a high electrical level, in this case, the switching transistor Q1 is connected, and when the switching transistor Q1 is connected, an output current Io of the power conversion circuit 110 becomes large, which may finally control a fluctuation range of the input current Iin of the power conversion circuit 110 to be in a preset range.

A power supply current I_load of the power amplifier transistor 150 in the RRU needs to be a square wave current (I_load may be, for example, a square wave current whose period is approximately 10 ms), which is determined by the TDD standard. One of the objectives of the technical solutions in the embodiments of the present invention is to smooth the output current Io of the power conversion circuit 110, so that the input current Iin reflected in the power conversion circuit 110 is a basically smooth direct current Iin, and further a cable diameter of a power cable may be designed according to the basically smooth direct current Iin during design of the power cable, so as to obtain lower product costs.

It is assumed that a waveform of the power supply current I_load of the power amplifier transistor 150 is shown in FIG. 7.

Within a time T1, an energy storage capacitor C1 starts charging for energy storage (it is assumed that a charging current of the energy storage capacitor C1 at this moment is I_ch), and in this case, Io = I_ch + I_load. Within a time T2, the energy storage capacitor C1 starts discharging (it is assumed that a discharging current of the energy storage capacitor C1 at this moment is I_ch), and in this case, Io = I_load - I_ch. The power amplifier transistor 150 reflects a characteristic of a dynamic load. When I_load is in a period of a large current, the energy storage capacitor C1 and the power conversion circuit 110 collectively provide energy for the power amplifier transistor 150. When I_load is in a period of a current, the power conversion circuit 110 further charges the energy storage capacitor C1 (in this case, the energy storage capacitor C1 implements a function of energy storage) in addition to providing energy for the power amplifier transistor 150. Because the energy storage capacitor C1 has a cyclic charging and discharging process, the output current of the power conversion circuit 110 can be relatively smooth, which further implements an effect of low-frequency smooth filtering. The low-frequency control circuit 130 controls the switching transistor Q1 to be connected or disconnected, which helps implement that the input current Iin of the power conversion circuit 110 maintains basic consistency within the time T1 and the time T2.

It may be learned from the foregoing that, the RRU provided by this embodiment includes a power conversion circuit, a low-frequency control circuit, an isolation conversion circuit, an energy storage circuit, and a power amplifier transistor, where the power conversion circuit is configured to boost a voltage input by a power supply source of the RRU and then output a voltage, the isolation conversion circuit is configured to perform primary and secondary safety regulation isolation on the voltage output by the power conversion circuit and then output the voltage to the power amplifier transistor, the energy storage circuit is connected in parallel to the isolation conversion circuit, and the low-frequency control circuit is configured to control a fluctuation range of an input current of the power conversion circuit to be in a preset range. Introducing the low-frequency control circuit and the energy storage circuit in the RRU helps smooth an input current of the RRU, and smoothing the input current of the RRU helps implement that, for a power cable for supplying remote power to the RRU, a smaller cable diameter is selected for use, a remote distance may also be longer, and the cable diameter and the remote distance may basically be not affected by changes of an input voltage of the RRU and load power (that is, a power transistor). In addition, in a scenario in which a load current or load power of the RRU greatly fluctuates, smoothing the input current of the RRU also helps reduce mutual impact among devices.

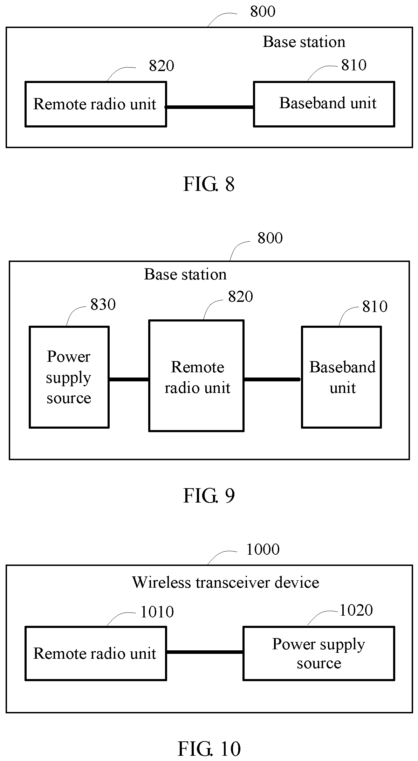

Referring to FIG. 8, an embodiment of the present invention provides a base station 800, including: a baseband unit 810 and a remote radio unit 820 that interconnect and interwork with each other.

The remote radio unit 820 may be the remote radio unit 100 described in the foregoing embodiments.

As shown in FIG. 1, the remote radio unit 100, where the remote radio unit 100 operates in a TDD mode, and the remote radio unit 100 may include a power conversion circuit 110, a low-frequency control circuit 130, an energy storage circuit 120, an isolation conversion circuit 140, and a power amplifier transistor 150.

The power conversion circuit 110 is configured to boost a voltage input by a power supply source 200 of the remote radio unit 100 to the power conversion circuit 110 and then output a voltage. If the power supply source 200 is located at a remote end relative to the remote radio unit 100, in this case, the power supply source 200 may also be referred to as a power supply source. A first resistor R1 and a second resistor R2 in FIG. 1 are equivalent impedance of two power supply cables that connect the remote radio unit 100 and the power supply source 200. It may be understood that when the two power supply cables that connect the remote radio unit 100 and the power supply source 200 are long enough, the equivalent impedance of the two power supply cables is also large enough. In this case, the equivalent impedance is generally not ignored for processing.

The isolation conversion circuit 140 is configured to perform primary and secondary safety regulation isolation on the voltage output by the power conversion circuit 110 and then output the voltage to the power amplifier transistor 150.

An output end of the energy storage circuit 120 is connected in parallel to an input end of the isolation conversion circuit 140.

The low-frequency control circuit 130 connected to the power conversion circuit 110 is configured to control a fluctuation range of an input current of the power conversion circuit 110 to be in a preset range.

Referring to FIG. 2 to FIG. 5, in some embodiments of the present invention, the power conversion circuit 110 may include:

a diode D1, a first inductor L1, and a switching transistor Q1.

A positive electrode of the diode D1 is connected to a positive input end of the remote radio unit 100 by using the first inductor L1 (the positive input end of the remote radio unit 100 is connected to a positive output end of the power supply source 200, which therefore, is equivalent to that the positive electrode of the diode D1 is connected to the positive output end of the power supply source 200 by using the first inductor L1), the positive electrode of the diode D1 is further connected to a drain electrode D of the switching transistor Q1, a source electrode S of the switching transistor Q1 is connected to a negative input end of the remote radio unit 100 (the negative input end of the remote radio unit 100 is connected to a negative output end of the power supply source 200, which therefore, is equivalent to that the source electrode S of the switching transistor Q1 is connected to the negative output end of the power supply source 200), and a gate electrode G of the switching transistor Q1 is connected to an output end of the foregoing low-frequency control circuit.

Referring to FIG. 2 to FIG. 5, in some embodiments of the present invention, the energy storage circuit 120 includes a capacitor C1, where the capacitor C1 is connected between a negative electrode of the diode D1 and the source electrode S of the switching transistor Q1.

Referring to FIG. 2, in some embodiments of the present invention, the low-frequency control circuit 130 may include:

a second inductor L2, a first amplifier 134, a second amplifier 132, a first comparator 133, and a multiplier 131.

The second inductor L2 is configured to induce a current from the negative output end of the power supply source 200 of the remote radio unit 100, where two ends of the second inductor L2 are respectively connected to two input ends of the first amplifier 134, an output end of the first amplifier 134 is connected to a first inverting input end of the first comparator 133, a positive input end of the second amplifier 132 is connected to an output end (the output end of the first reference voltage outputs the first reference voltage) Vref of a first reference voltage, and a negative input end of the second amplifier 132 is connected to a negative electrode of the diode D1 in the power conversion circuit 110, where an output end of the second amplifier 132 is connected to a first input end of the multiplier 131, a second input end of the multiplier 131 is connected to an output end 135 (the output end 135 of the constant direct current voltage outputs the constant direct current voltage) of a constant direct current voltage, an output end of the multiplier 131 is connected to a second inverting input end of the first comparator 133, and a non-inverting input end of the first comparator 133 is connected to an output end 136 of a second reference voltage.

Referring to FIG. 3, in some embodiments of the present invention, the low-frequency control circuit 130 may include:

a third resistor R3, the first amplifier 134, the second amplifier 132, the first comparator 133, and the multiplier 131.

The negative input end of the remote radio unit 100 is connected to the source electrode S of the switching transistor Q1 by using the third resistor R3, two ends of the third resistor R3 are respectively connected to the two input ends of the first amplifier 134, the output end of the first amplifier 134 is connected to the first inverting input end of the first comparator 133, the positive input end of the second amplifier 132 is connected to the output end Vref (a voltage output by the output end Vref of the first reference voltage is the first reference voltage) of the first reference voltage, and the negative input end of the second amplifier 132 is connected to the negative electrode of the diode D1, where the output end of the second amplifier 132 is connected to the first input end of the multiplier 131, the second input end of the multiplier 131 is connected to the output end 135 of the constant direct current voltage, the output end of the multiplier 131 is connected to the second inverting input end of the first comparator 133, and the non-inverting input end of the first comparator 133 is connected to the output end 136 of the second reference voltage.

Referring to FIG. 4, in some embodiments of the present invention, the low-frequency control circuit 130 shown in FIG. 3 may further include:

a bleeder circuit 137, where the negative input end of the second amplifier 132 is connected to the negative electrode of the diode D1 by using the bleeder circuit 137. Introduction of the bleeder circuit 137 may avoid a problem that: safety of operating of a circuit may be affected because an output voltage VO of the power conversion circuit 110 is excessively high.

Referring to FIG. 5, in some embodiments of the present invention, the bleeder circuit 137 shown in FIG. 4 may specifically include: a fourth resistor R4 and a fifth resistor R5, where the negative input end of the second amplifier 132 is connected to the negative electrode of the diode D1 by using the fourth resistor R4, and the negative input end of the second amplifier 132 is further grounded by using the fifth resistor R5. It may be understood that a structure of the bleeder circuit shown in FIG. 5 is simple, costs of the bleeder circuit are low, and an operating status is quite stable.

It may be understood that the switching transistor Q1 shown in FIG. 2 to FIG. 5 may be replaced with a triode transistor whose function is similar to that of the switching transistor Q1. A manner of connections between ports of the alternative triode transistor and other devices is similar to a manner of connections between ports of the switching transistor Q1 and other devices, and details are not described herein again.

In a scenario in which an input power cable is remote, a power cable between the power supply source of the RRU, and the RRU is relatively long may be as long as tens of meters or even hundreds of meters); therefore, impedance of the remote power cable is a problem that needs to be considered. It is assumed that R1 and R2 are equivalent impedance of the remote power cable, Vs represents an output voltage of the power supply source of the RRU (Vs is constant), and Vin represents an input voltage of the RRU, and Iin represents an input current of the RRU; then, a relationship between Vs and Vin may be expressed by the following formula:

$$Vin = Vs - Iin \times (R1+R2)$$

Therefore, Vin decreases with the increase of Iin, and a variation relationship between Vin and Iin may be shown in FIG. 6.

As shown in FIG. 6, when the input current Iin of the RRU periodically changes, the input voltage Vin of the RRU also periodically changes. Therefore, if the input current Iin of the RRU periodically and greatly changes without control, consequently, a variation range of the input voltage Vin of the RRU is quite wide (certainly, it needs to be ensured that a lowest voltage is not lower than a required lowest input voltage of the RRU), which definitely brings about problems such as relatively high costs of the power cable and increased difficulty in selecting a type of an internal device of the RRU. Therefore, in the technical solutions of the embodiments of the present invention, the energy storage circuit 120 and the low-frequency control circuit 130 are introduced in the RRU to control a fluctuation range of an input current to be in a preset range, which controls the input current to follow a constant voltage to maintain stableness and constancy.

The circuits that are shown in FIG. 1 to FIG. 5 and provided by embodiments of the present invention may pertinently resolve a problem of remoteness of the power cable for supplying power to the RRU in a TDD standard. For the power cable for supplying remote power to the RRU, a smaller cable diameter may be selected for use, a remote distance may also be longer, and the cable diameter and the remote distance may basically be not affected by changes of the input voltage of the RRU and load power (that is, a power transistor). In a scenario in which a load current or load power of the RRU greatly fluctuates, smoothing the input current of the RRU (for example, the input current of the power conversion circuit 110) helps reduce mutual impact among devices. In addition, several structures of circuit with low costs, stable and reliable performance, and safe running are provided as examples in FIG. 2 to FIG. 5, which helps better implement and promote RRU products.

The following briefly introduces operating principles of the circuit.

The low-frequency control circuit 130 detects an input current Iin of the power conversion circuit 110. The low-frequency control circuit 130 shown in FIG. 3 to FIG. 5 detects the input current Iin of the power conversion circuit 110 by using the third resistor R3. The current Iin running through the third resistor R3 is equal to a voltage of the two ends of the third resistor R3 divided by a resistor value of the third resistor R3. Therefore, a voltage that has a proportional relationship with the input current Iin may be acquired by using the third resistor R3. The input current Iin of the power conversion circuit 110 in FIG. 3 to FIG. 5 runs through the third resistor R3; therefore, the voltage of the two ends of the third resistor R3, that is, VR3 = Iin* R3, and Iin = VR3/R3. The low-frequency control circuit 130 in FIG. 2 can obtain the voltage that has a proportional relationship with the input current Iin of the power conversion circuit 110 by using the second inductor L2, where the second inductor L2 in FIG. 2 induces the input current Iin of the power conversion circuit 110 in a manner of mutual inductance, and a voltage VL2 of the two ends of the second inductor L2 also has a proportional relationship with the input current Iin of the power conversion circuit 110.

In the low-frequency control circuit 130, the multiplier 131 is used to multiply a constant direct current voltage Vh (the output end 135 of the constant direct current voltage in FIG. 2 to FIG. 5 outputs the constant direct current voltage Vh) by A to obtain a result B2 (that is, an output voltage of the multiplier 131 is B2), where A is an output of the second amplifier 132. The low-frequency control circuit 130 shown in FIG. 2 and FIG. 3 has no bleeder circuit; therefore, A = Vref - VO. The low-frequency control circuit 130 shown in FIG. 4 and FIG. 5 further includes the bleeder circuit; therefore, A = Vref - VO*1/H, where VO is the output voltage of the power conversion circuit 110, and 1/H is a voltage division ratio of the bleeder circuit 137. If H is equal to 1, it indicates that the bleeder circuit 137 is not introduced (a scenario in which the bleeder circuit 137 is not introduced may be shown in FIG. 2 and FIG. 3).

It is assumed that an output voltage of the first amplifier 134 is B1, and the output voltage of the multiplier 131 is B2. When the voltage B1 is greater than the voltage B2, the first comparator 133 outputs a low electrical level, in this case, the switching transistor Q1 is disconnected, and when the switching transistor Q1 is disconnected, and an output current Io of the power conversion circuit 110 becomes small; when the voltage B1 is less than the voltage B2, the first comparator 133 outputs a high electrical level, in this case, the switching transistor Q1 is connected, and when the switching transistor Q1 is connected, an output current Io of the power conversion circuit 110 becomes large, which may finally control a fluctuation range of the input current Iin of the power conversion circuit 110 to be in a preset range.

A power supply current I_load of the power amplifier transistor 150 in the RRU needs to be a square wave current (I_load may be, for example, a square wave current whose period is approximately 10 ms), which is determined by the TDD standard. One of the objectives of the technical solutions in the embodiments of the present invention is to smooth the output current Io of the power conversion circuit 110, so that the input current Iin reflected in the power conversion circuit 110 is a basically smooth direct current Iin, and further a cable diameter of a power cable may be designed according to the basically smooth direct current Iin during design of the power cable, so as to obtain lower product costs.

It is assumed that a waveform of the power supply current I_load of the power amplifier transistor 150 is shown in FIG. 7.

Within a time T1, an energy storage capacitor C1 starts charging for energy storage (it is assumed that a charging current of the energy storage capacitor C1 at this moment is I_ch), and in this case, Io = I_ch + I_load. Within a time T2, the energy storage capacitor C1 starts discharging (it is assumed that a discharging current of the energy storage capacitor C1 at this moment is I_ch), and in this case, Io = I_load - I_ch. The power amplifier transistor 150 reflects a characteristic of a dynamic load. When I_load is in a period of a large current, the energy storage capacitor C1 and the power conversion circuit 110 collectively provide energy for the power transistor 150. When I_load is in a period of a current, the power conversion circuit 110 further charges the energy storage capacitor C1 (in this case, the energy storage capacitor C1 implements a function of energy storage) in addition to providing energy for the power transistor 150. Because the energy storage capacitor C1 has a cyclic charging and discharging process, the output current of the power conversion circuit 110 can be relatively smooth, which further implements an effect of low-frequency smooth filtering. The low-frequency control circuit 130 controls the switching transistor Q1 to be connected or disconnected, which helps implement that the input current Iin of the power conversion circuit 110 maintains basic consistency within the time T1 and the time T2.

Referring to FIG. 9, the base station 800 may further include: a power supply source 830 for providing remote power supply for the remote radio unit 820.

It may be learned from the foregoing that, the base station 800 provided in this embodiment mainly includes a baseband unit 810 for interconnection and interworking, and a remote radio unit 820, where the remote radio unit 820 includes: a power conversion circuit, a low-frequency control circuit, an isolation conversion circuit, an energy storage circuit and a power amplifier transistor, where the power conversion circuit is configured to boost a voltage input by a power supply source of an RRU and then output a voltage, the isolation conversion circuit is configured to perform primary and secondary safety regulation isolation on the voltage output by the power conversion circuit and then output the voltage to the power amplifier transistor, the energy storage circuit is connected in parallel to an input end of the isolation conversion circuit, and the low-frequency control circuit is configured to control a fluctuation range of an input current of the power conversion circuit to be in a preset range. Introducing the low-frequency control circuit and the energy storage circuit in the RRU helps smooth an input current of the RRU, and smoothing the input current of the RRU helps implement that, for a power cable for supplying remote power to the RRU, a smaller cable diameter is selected for use, a remote distance may also be longer, and the cable diameter and the remote distance may basically be not affected by changes of an input voltage of the RRU and load power (that is, a power transistor). In addition, in a scenario in which a load current or load power of the RRU greatly fluctuates, smoothing the input current of the RRU also helps reduce mutual impact among devices.

Referring to FIG. 10, an embodiment of the present invention further provide a wireless transceiver device 1000, where the wireless transceiver device 1000 may include: a remote radio unit 1010 and a power supply source 1020 that is used for supplying power to the remote radio unit 1010. The remote radio unit 1010 may be the remote radio unit 100 described in the foregoing embodiments.

In the foregoing embodiments, the description of each embodiment has respective focuses. For a part that is not described in detail in an embodiment, reference may be made to related descriptions in other embodiments.

The remote radio unit provided in the embodiments of the present invention is described in detail above. The principle and implementation of the present invention are described herein through specific examples. The description about the embodiments of the present invention is merely provided to help understand the method and core ideas of the present invention. In addition, persons of ordinary skill in the art can make variations and modifications to the present invention in terms of the specific implementations and application scopes according to the ideas of the present invention. Therefore, the content of specification shall not be construed as a limit to the present invention.

**Claims**

1. A remote radio unit (100), comprising:

   a power conversion circuit (110), a low-frequency control circuit (130), an energy storage circuit (120), an isolation conversion circuit (140), and a power amplifier transistor (150), wherein
   the power conversion circuit (110) is configured to boost a voltage input by a power supply source (200) of the remote radio unit (100) and then output a voltage;
   the isolation conversion circuit (140) is configured to perform primary and secondary safety regulation isolation on the voltage output by the power conversion circuit (110) and then output the voltage to the power amplifier transistor (150); and
   the energy storage circuit (120) is connected in parallel to the isolation conversion circuit (140), wherein
   the low-frequency control circuit (130) connected to the power conversion circuit (110) is configured to control a fluctuation range of an input current of the power conversion circuit (110) to be in a preset range.

**2.** The remote radio unit (100) according to claim 1, wherein
the power conversion circuit (110) comprises: a diode (D1), a first inductor (L1), and a switching transistor (Q1), wherein
a positive electrode of the diode (D1) is connected to a positive input end of the remote radio unit (100) by using the first inductor (L1), the positive electrode of the diode (D1) is further connected to a drain electrode of the switching transistor (Q1), a source electrode of the switching transistor (Q1) is connected to a negative input end of the remote radio unit (100), and a gate electrode of the switching transistor (Q1) is connected to an output end of the low-frequency control circuit (130).

**3.** The remote radio unit (100) according to claim 2, wherein
the energy storage circuit (120) comprises a capacitor (C1), wherein the capacitor (C1) is connected between a negative electrode of the diode (D1) and the source electrode of the switching transistor (Q1).

**4.** The remote radio unit (100) according to claim 2 or 3, wherein
the low-frequency control circuit (130) comprises: a second inductor (L2), a first amplifier (134), a second amplifier (132), a first comparator (133), and a multiplier (131), wherein
the second inductor (L2) is configured to induce a current from a negative output end of the power supply source (200) of the remote radio unit (100), wherein two ends of the second inductor (L2) are respectively connected to two input ends of the first amplifier (134), an output end of the first amplifier (134) is connected to a first inverting input end of the first comparator (133), a positive input end of the second amplifier (132) is connected to an output end of a first reference voltage, a negative input end of the second amplifier (132) is connected to the negative electrode of the diode (D1), an output end of the second amplifier (132) is connected to a first input end of the multiplier (131), a second input end of the multiplier (131) is connected to an output end of a constant direct current voltage, an output end of the multiplier (131) is connected to a second inverting input end of the first comparator (133), and a non-inverting input end of the first comparator (131) is connected to an output end of a second reference voltage.

**5.** The remote radio unit (100) according to claim 2 or 3, wherein
the low-frequency control circuit (130) comprises: a third resistor (R3), a first amplifier (134), a second amplifier (132), a first comparator (133), and a multiplier (131), wherein
the negative input end of the remote radio unit (100) is connected to the source electrode of the switching transistor (Q1) by using the third resistor (R3), two ends of the third resistor (R3) are respectively connected to two input ends of the first amplifier (134), an output end of the first amplifier (134) is connected to a first inverting input end of the first comparator (133), a positive input end of the second amplifier (132) is connected to an output end of a first reference voltage, a negative input end of the second amplifier (132) is connected to the negative electrode of the diode (D1), an output end of the second amplifier (132) is connected to a first input end of the multiplier (131), a second input end of the multiplier (131) is connected to an output end of a constant direct current voltage, an output end of the multiplier (131) is connected to a second inverting input end of the first comparator (133), and a non-inverting input end of the first comparator (133) is connected to an output end of a second reference voltage.

**6.** The remote radio unit (100) according to claim 4 or 5, wherein the low-frequency control circuit (130) further comprises a bleeder circuit (137), wherein the negative input end of the second amplifier (132) is connected to the negative electrode of the diode (D1) by using the bleeder circuit (137).

**7.** The remote radio unit (100) according to claim 6, wherein
the bleeder circuit (137) comprises a fourth resistor (R4) and a fifth resistor (R5), wherein the negative input end of the second amplifier (132) is connected to the negative electrode of the diode (D1) by using the fourth resistor (R4), and the negative input end of the second amplifier (132) is further grounded by using the fifth resistor (R5).

**8.** A base station (800), comprising:

a baseband unit (810) and a remote radio unit (820), wherein the remote radio unit (820) is the remote radio unit according to any one of claims 1 to 7.

**9.** A wireless transceiver device (1000), comprising: a remote radio unit (1010) and a power supply source (1020) that is used for supplying power to the remote radio unit (1010), wherein the remote radio unit (1010) is the remote radio unit according to any one of claims 1 to 7.

**Patentansprüche**

**1.** Entfernte Funkeinheit (100), umfassend:

eine Leistungswandlungsschaltung (110), eine Niederfrequenz-Steuerschaltung (130), eine Energiespeicherschaltung (120), eine Isolationswandlungsschaltung (140) und einen Leistungsverstärkertransistor (150), wobei

die Leistungswandlungsschaltung (110) dafür ausgelegt ist, eine durch eine Stromversorgungsquelle (200) der entfernten Funkeinheit (100) eingegebene Spannung zu erhöhen und dann eine Spannung auszugeben;

die Isolationswandlungsschaltung (140) dafür ausgelegt ist, primäre und sekundäre Sicherheitsregelungsisolation an der durch die Leistungswandlungsschaltung (110) ausgegebenen Spannung auszuführen und dann die Spannung an den Leistungsverstärkertransistor (150) auszugeben; und

die Energiespeicherschaltung (120) mit der Isolationswandlungsschaltung (140) parallel geschaltet ist, wobei

die mit der Leistungswandlungsschaltung (110) verbundene Niederfrequenz-Steuerschaltung (130) dafür ausgelegt ist, einen Fluktuationsbereich eines Eingangsstroms der Leistungswandlungsschaltung (110) so zu steuern, dass er in einem voreingestellten Bereich liegt.

2. Entfernte Funkeinheit (100) nach Anspruch 1, wobei die Leistungswandlungsschaltung (110) eine Diode (D1), eine erste Induktivität (R1) und einen Schalttransistor (Q1) umfasst, wobei

die positive Elektrode der Diode (D1) durch Verwendung der ersten Induktivität (L1) mit einem positiven Eingangsende der entfernten Funkeinheit (100) verbunden ist, die positive Elektrode der Diode (D1) ferner mit einer Drainelektrode des Schalttransistors (Q1) verbunden ist, eine Sourceelektrode des Schalttransistors (Q1) mit einem negativen Eingangsende der entfernten Funkeinheit (100) verbunden ist und eine Gateelektrode des Schalttransistors (Q1) mit einem Ausgangsende der Niederfrequenz-Steuerschaltung (130) verbunden ist.

3. Entfernte Funkeinheit (100) nach Anspruch 2, wobei die Energiespeicherschaltung (120) einen Kondensator (C1) umfasst, wobei der Kondensator (C1) zwischen eine negative Elektrode der Diode (D1) und die Sourceelektrode des Schalttransistors (Q1) geschaltet ist.

4. Entfernte Funkeinheit (100) nach Anspruch 2 oder 3, wobei

die Niederfrequenz-Steuerschaltung (130) eine zweite Induktivität (L2), einen ersten Verstärker (134), einen zweiten Verstärker (132), einen ersten Komparator (133) und einen Multiplizierer (131) umfasst, wobei

die zweite Induktivität (L2) dafür ausgelegt ist, einen Strom von einem negativen Ausgangsende der Stromversorgungsquelle (200) der entfernten Funkeinheit (100) zu induzieren, wobei zwei Enden der zweiten Induktivität (L2) jeweils mit zwei Eingangsenden des ersten Verstärkers (134) verbunden sind, ein Ausgangsende des ersten Verstärkers (134) mit einem ersten invertierenden Eingangsende des ersten Komparators (133) verbunden ist, ein positives Eingangsende des zweiten Verstärkers (132) mit einem Ausgangsende einer ersten Referenzspannung verbunden ist, ein negatives Eingangsende des zweiten Verstärkers (132) mit der negativen Elektrode der Diode (D1) verbunden ist, ein Ausgangsende des zweiten Verstärkers (132) mit einem ersten Eingangsende des Multiplizierers (131) verbunden ist, ein zweites Eingangsende des Multiplizierers (131) mit einem Ausgangsende einer konstanten Gleichstromspannung verbunden ist, ein Ausgangsende des Multiplizierers (131) mit einem zweiten invertierenden Eingangsende des ersten Komparators (133) verbunden ist und ein nichtinvertierendes Eingangsende des ersten Komparators (131) mit einem Ausgangsende einer zweiten Referenzspannung verbunden ist.

5. Entfernte Funkeinheit (100) nach Anspruch 2 oder 3, wobei

die Niederfrequenz-Steuerschaltung (130) einen dritten Widerstand (R3), einen ersten Verstärker (134), einen zweiten Verstärker (132), einen ersten Komparator (133) und einen Multiplizierer (131) umfasst, wobei

das negative Eingangsende der entfernten Funkeinheit (100) durch Verwendung des dritten Widerstands (R3) mit der Sourceelektrode des Schalttransistors (Q1) verbunden ist, zwei Enden des dritten Widerstands (R3) jeweils mit zwei Eingangsenden des ersten Verstärkers (134) verbunden sind, ein Ausgangsende des ersten Verstärkers (134) mit einem ersten invertierenden Eingangsende des ersten Komparators (133) verbunden ist, ein positives Eingangsende des zweiten Verstärkers (132) mit einem Ausgangsende einer ersten Referenzspannung verbunden ist, ein negatives Eingangsende des zweiten Verstärkers (132) mit der negativen Elektrode der Diode (D1) verbunden ist, ein Ausgangsende des zweiten Verstärkers (132) mit einem ersten Eingangsende des Multiplizierers (131) verbunden ist, ein zweites Eingangsende des Multiplizierers (131) mit einem Ausgangsende einer konstanten Gleichstromspannung verbunden ist, ein Ausgangsende des Multiplizierers (131) mit einem zweiten invertierenden Eingangsende des ersten Komparators (133) verbunden ist und ein nichtinvertierendes Eingangsende des ersten Komparators (133) mit einem Ausgangsende einer zweiten Referenzspannung verbunden ist.

6. Entfernte Funkeinheit (100) nach Anspruch 4 oder 5, wobei die Niederfrequenz-Steuerschaltung (130) ferner eine Vorbelastungsschaltung (137) umfasst, wobei das negative Eingangsende des zweiten Verstärkers (132) durch Verwendung der Vorbelastungsschaltung (137) mit der negativen Elektrode der Diode (D1) verbunden ist.

7. Entfernte Funkeinheit (100) nach Anspruch 6, wobei die Vorbelastungsschaltung (137) einen vierten Widerstand (R4) und einen fünften Widerstand (R5) umfasst, wobei das negative Eingangsende des zweiten Verstärkers (132) durch Verwendung des vierten Widerstands (R4) mit der negativen Elektrode der Diode (D1) verbunden ist und das negative Eingangsende des zweiten Verstärkers (132) ferner durch Verwendung des fünften Widerstands (R5) mit Masse verbunden ist.

8. Basisstation (800), umfassend:

eine Basisbandeinheit (810) und eine entfernte Funkeinheit (820), wobei die entfernte Funkeinheit (820) die entfernte Funkeinheit nach einem der Ansprüche 1 bis 7 ist.

9. Drahtlose Sendeempfängervorrichtung (1000), die eine entfernte Funkeinheit (1010) und eine Stromversorgungsquelle (1020) umfasst, die zur Versorgung der entfernten Funkeinheit (1010) mit Strom verwendet wird, wobei die entfernte Funkeinheit (1010) die entfernte Funkeinheit nach einem der Ansprüche 1 bis 7 ist.

## Revendications

1. Unité radio distante (100), comprenant:

un circuit de conversion de puissance (110), un circuit de commande basse fréquence (130), un circuit de stockage d'énergie (120), un circuit de conversion isolation (140), et un transistor d'amplificateur de puissance (150), dans laquelle le circuit de conversion de puissance (110) est configuré pour amplifier une entrée de tension par une source d'alimentation électrique (200) de l'unité radio distante (100) puis produire en sortie une tension; le circuit de conversion isolation (140) est configuré pour exécuter une isolation de réglementation de sécurité primaire et secondaire sur la sortie de tension du circuit de conversion de puissance (110) puis produire en sortie la tension vers le transistor d'amplificateur de puissance (150); et le circuit de stockage d'énergie (120) est connecté en parallèle au circuit de conversion isolation (140), dans laquelle le circuit de commande basse fréquence (130) connecté au circuit de conversion de puissance (110) est configuré pour commander une plage de fluctuation d'un courant d'entrée du circuit de conversion de puissance (110) dans une plage prédéfinie.

2. Unité radio distante (100) selon la revendication 1, dans laquelle
le circuit de conversion de puissance (110) comprend: une diode (D1), une première bobine d'induction (L1), et un transistor de commutation (Q1), dans laquelle
une électrode positive de la diode (D1) est connectée à une extrémité d'entrée positive de l'unité radio distante (100) au moyen de la première bobine d'induction (L1), l'électrode positive de la diode (D1) est connectée en outre à une électrode de drain du transistor de commutation (Q1), une électrode de source du transistor de commutation (Q1) est connectée à une extrémité d'entrée négative de l'unité radio distante (100), et une électrode de grille du transistor de commutation (Q1) est connectée à une extrémité de sortie du circuit de commande basse fréquence (130).

3. Unité radio distante (100) selon la revendication 2, dans laquelle
le circuit de stockage d'énergie (120) comprend un condensateur (C1), dans laquelle le condensateur (C1) est connecté entre une électrode négative de la diode (D1) et l'électrode de source du transistor de commutation (Q1).

4. Unité radio distante (100) selon la revendication 2 ou 3, dans laquelle
le circuit de commande basse fréquence (130) comprend: une seconde bobine d'induction (L2), un premier amplificateur (134), un second amplificateur (132), un premier comparateur (133), et un multiplicateur (131), dans laquelle
la seconde bobine d'induction (L2) est configurée pour induire un courant depuis une extrémité de sortie négative de la source d'alimentation électrique (200) de l'unité radio distante (100), dans laquelle deux extrémités de la seconde bobine d'induction (L2) sont connectées respectivement à deux extrémités d'entrée du premier amplificateur (134), une extrémité de sortie du premier amplificateur (134) est connectée à une première extrémité d'entrée inverseuse du premier comparateur (133), une extrémité d'entrée positive du second amplificateur (132) est connectée à une extrémité de sortie d'une première tension de référence, une extrémité d'entrée négative du second amplificateur (132) est connectée à l'électrode négative de la diode (D1), une extrémité de sortie du second amplificateur (132) est connectée à une première extrémité d'entrée du multiplicateur (131), une seconde extrémité d'entrée du multiplicateur (131) est connectée à une extrémité de sortie d'une tension de courant continu constante, une extrémité de sortie du multiplicateur (131) est connectée à une seconde extrémité d'entrée inverseuse du premier comparateur (133), et une extrémité d'entrée non inverseuse du premier comparateur (131) est connectée à une extrémité de sortie d'une seconde tension de référence.

5.  Unité radio distante (100) selon la revendication 2 ou 3, dans laquelle
le circuit de commande basse fréquence (130) comprend: une troisième résistance (R3), un premier amplificateur (134), un second amplificateur (132), un premier comparateur (133), et un multiplicateur (131), dans laquelle
l'extrémité d'entrée négative de l'unité radio distante (100) est connectée à l'électrode de source du transistor de commutation (Q1) au moyen de la troisième résistance (R3), deux extrémités de la troisième résistance (R3) sont connectées respectivement à deux extrémités d'entrée du premier amplificateur (134), une extrémité de sortie du premier amplificateur (134) est connectée à une première extrémité d'entrée inverseuse du premier comparateur (133), une extrémité d'entrée positive du second amplificateur (132) est connectée à une extrémité de sortie d'une première tension de référence, une extrémité d'entrée négative du second amplificateur (132) est connectée à l'électrode négative de la diode (D1), une extrémité de sortie du second amplificateur (132) est connectée à une première extrémité d'entrée du multiplicateur (131), une seconde extrémité d'entrée du multiplicateur (131) est connectée à une extrémité de sortie d'une tension de courant continu constante, une extrémité de sortie du multiplicateur (131) est connectée à une seconde extrémité d'entrée inverseuse du premier comparateur (133), et une extrémité d'entrée non inverseuse du premier comparateur (133) est connectée à une extrémité de sortie d'une seconde tension de référence.

6.  Unité radio distante (100) selon la revendication 4 ou 5, dans laquelle le circuit de commande basse fréquence (130) comprend en outre un circuit de fuite (137), dans laquelle l'extrémité d'entrée négative du second amplificateur (132) est connectée à l'électrode négative de la diode (D1) au moyen du circuit de fuite (137).

7.  Unité radio distante (100) selon la revendication 6, dans laquelle le circuit de fuite (137) comprend une quatrième résistance (R4) et une cinquième résistance (R5), dans laquelle l'extrémité d'entrée négative du second amplificateur (132) est connectée à l'électrode négative de la diode (D1) au moyen de la quatrième résistance (R4), et l'extrémité d'entrée négative du second amplificateur (132) est en outre mise à la masse au moyen de la cinquième résistance (R5).

8.  Station de base (800), comprenant :

une unité de bande de base (810) et une unité radio distante (820), dans laquelle l'unité radio distante (820) est l'unité radio distante selon l'une quelconque des revendications 1 à 7.

9.  Dispositif émetteur-récepteur sans fil (1000), comprenant: une unité radio distante (1010) et une source d'alimentation électrique (1020) utilisée pour fournir de l'énergie à l'unité radio distante (1010), dans lequel l'unité radio distante (1010) est l'unité radio distante selon l'une quelconque des revendications 1 à 7.

EP 3 021 638 B1

FIG. 1

FIG. 2

FIG. 3

FIG. 4

FIG. 5

FIG. 6

FIG. 7

800

| Base station |
| --- |
| Remote radio unit —820 ——— Baseband unit —810 |

FIG. 8

800

Base station

| Power supply source —830 | Remote radio unit —820 | Baseband unit —810 |
| --- | --- | --- |

FIG. 9

1000

Wireless transceiver device

| Remote radio unit —1010 | Power supply source —1020 |
| --- | --- |

FIG. 10

**EP 3 021 638 B1**

**Patent documents cited in the description**

• EP 2449663 A